(19) **Europäisches Patentamt / European Patent Office / Office européen des brevets**

(11) **EP 2 704 122 B1**

(12) **EUROPEAN PATENT SPECIFICATION**

(45) Date of publication and mention
of the grant of the patent:
**25.02.2015 Bulletin 2015/09**

(21) Application number: **11864308.9**

(22) Date of filing: **27.04.2011**

(51) Int Cl.:
***G08G 1/16*** (2006.01)

(86) International application number:
**PCT/JP2011/060323**

(87) International publication number:
**WO 2012/147187 (01.11.2012 Gazette 2012/44)**

(54) **PERIPHERY VEHICLE DETECTION DEVICE**

UMGEBUNGSDETEKTOR FÜR FAHRZEUG

DISPOSITIF DE DÉTECTION PÉRIPHÉRIQUE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.03.2014 Bulletin 2014/10**

(73) Proprietor: **TOYOTA JIDOSHA KABUSHIKI
KAISHA
Toyota-shi, Aichi-ken, 471-8571 (JP)**

(72) Inventor: **TAKAHASHI, Yoshihiko
Toyota-shi,
Aichi-ken, 471-8571 (JP)**

(74) Representative: **TBK
Bavariaring 4-6
80336 München (DE)**

(56) References cited:
**DE-A1-102007 033 887     JP-A- 2000 214 256
JP-A- 2001 180 404     JP-A- 2006 514 382
JP-A- 2008 056 173     US-A1- 2003 025 597**

**Description**

Technical Field

The present invention is related to a neighboring vehicle detecting device and a method of detecting a neighboring vehicle.

Background Art

A vehicle travel control device is known in which during an automatic inter-vehicle distance control, if a preceding vehicle, which is traveling forward, has a lower vehicle speed with respect to a set vehicle speed of an own vehicle, it is determined whether the own vehicle can overtake the preceding vehicle based on a position of the own vehicle and traffic information, and an operation for overtaking the preceding vehicle is performed with an automatic steering control (see Patent Document 1, for example). The vehicle travel control device includes a rear side vehicle detecting part configured to detect a vehicle traveling on a lane which is located in a rear and side direction with respect to a lane on which the own vehicle is traveling. The rear side vehicle detecting part captures a rear and side scene with a CCD camera and performs image processing to detect the rear side vehicle traveling on a lane which is next to the lane on which the own vehicle is traveling.

Further, a vehicle-mounted scan radar device is known in which, in order to detect, with higher accuracy, a target object which exists in a forward direction with respect to the own vehicle and on the lane on which the own vehicle is traveling, a delay direction, which represents a predetermined delay with respect to a change in a direction of the target object detected by a radar, is calculated, and it is determined, based on the calculated delay direction, whether the target object exists on the lane on which the own vehicle is traveling.

[Patent Document 1] Japanese Laid-open Patent Publication No. 2003-63273
[Patent Document 2] Japanese Laid-open Patent Publication No. 9-203780

A similar vehicle detecting device is known from EP 1 657 568 A1.

Disclosure of Invention

Problem to be Solved by Invention

In detecting, with a rear radar or a back camera, a neighboring vehicle behind the own vehicle to perform a driver support, it is useful to detect the neighboring vehicle which is traveling on a particular lane (same as the traveling lane of the own vehicle or next to the traveling lane of the own vehicle, etc., for example) which has a predetermined relationship with a traveling lane of the own vehicle such that it is distinguished from other neighboring vehicles which are traveling on other lanes. In this connection, it may be possible to set a detection target region in a lane next to the traveling lane of the own vehicle to detect the neighboring vehicle in the detection target region with the rear radar or the back camera. However, if such a detection target region is set based on an assumption that the own vehicle is traveling in a straight line, detection accuracy may be reduced due to the change in a positional relationship between the neighboring lane and the own vehicle which occurs when the own vehicle travels on a curved road.

Therefore, an object of the invention is to provide a neighboring vehicle detecting device and a method which can detect, with high accuracy, a neighboring vehicle behind the own vehicle which is traveling on a particular lane which has a predetermined relationship with a traveling lane of the own vehicle.

Means to Solve the Problem

The invention is defined in independent claims 1 and 6.

According to one aspect of the invention, a neighboring vehicle detecting device is provided, which includes:
a neighboring vehicle detecting part configured to detect a neighboring vehicle behind an own vehicle;
a curved road detecting part configured to detect information about a curvature radius of a curved road;
a storing part configured to store a detection result of the curved road detecting part; and
a processing part configured to set a detection target region behind the own vehicle based on the detection result of the curved road detecting part which is stored in the storing part and is related to the curved road behind the own vehicle, wherein the processing part detects the neighboring vehicle behind the own vehicle based on a detection result in the set detection target region by the neighboring vehicle detecting part, the neighboring vehicle traveling on a particular lane which has a predetermined relationship with a traveling lane of the own vehicle.

Advantage of the Invention

According to the invention, a neighboring vehicle detecting device and a method can be obtained which can detect, with high accuracy, a neighboring vehicle behind the own vehicle which is traveling on a particular lane which has a predetermined relationship with a traveling lane of the own vehicle.

Brief Description of Drawings

Fig. 1 is a diagram for illustrating a main configuration of a neighboring vehicle detecting device 1 according to an embodiment (first embodiment) of the present invention.
Fig. 2 is a flowchart for illustrating an example of a neighboring vehicle detecting process executed by a processing device 10 according to the first embodiment.
Fig. 3 is a diagram for illustrating an example of a detection target region set by the processing device 10 in a case where a road behind the own vehicle is straight.
Fig. 4 is a diagram for illustrating an example of the detection target region set by the processing device 10 in a case where a road behind the own vehicle is curved.
Fig. 5 is a diagram for illustrating an example of a detection target region 22a which has a different shape as a variant embodiment.
Fig. 6 is a diagram for illustrating a main configuration of a neighboring vehicle detecting device 2 according to another embodiment (second embodiment) of the present invention.
Fig. 7 is a flowchart for illustrating an example of a neighboring vehicle detecting process executed by the processing device 10 according to the second embodiment.
Fig. 8 is a diagram for illustrating a main configuration of a neighboring vehicle detecting device 3 according to another embodiment (third embodiment) of the present invention.
Fig. 9 is a flowchart for illustrating an example of a neighboring vehicle detecting process executed by the processing device 10 according to the third embodiment.
Fig. 10 is a diagram for illustrating a main configuration of a neighboring vehicle detecting device 4 according to another embodiment (fourth embodiment) of the present invention.
Fig. 11 is a flowchart for illustrating an example of a neighboring vehicle detecting process executed by the processing device 10 according to the fourth embodiment.
Fig. 12 is a flowchart for illustrating another example of a neighboring vehicle detecting process executed by the processing device 10 according to the fourth embodiment.
Fig. 13 is a diagram for illustrating a main configuration of a neighboring vehicle detecting device 5 according to another embodiment (fifth embodiment) of the present invention.
Fig. 14 is an example of a flowchart of a lane change assist control executed by the processing device 10.

Description of Reference Symbols

| 1, 2, 3, 4, 5 | neighboring vehicle detecting device |
|---|---|
| 10 | processing device |
| 12 | storage device |
| 20 | rear radar sensor |
| 22 | detection region |
| 22a | detection target region |
| 30 | steering angle sensor |
| 31 | yaw rate sensor |
| 32 | vehicle speed sensor |
| 33 | front camera |
| 40 | output device |

Best Mode for Carrying Out the Invention

In the following, the best mode for carrying out the present invention will be described in detail by referring to the accompanying drawings.

[First Embodiment]

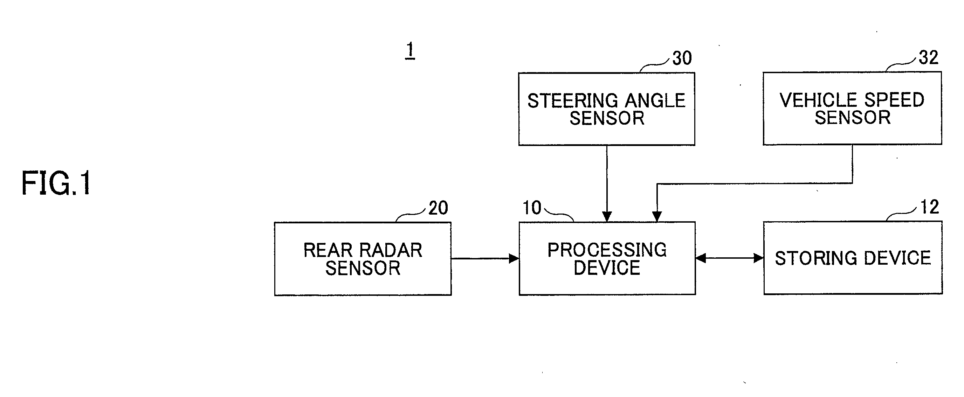

Fig. 1 is a diagram for illustrating a main configuration of a neighboring vehicle detecting device 1 according to an embodiment (first embodiment) of the present invention.

The neighboring vehicle detecting device 1 includes a processing device 10, a storage device 12, a rear radar sensor 20, a steering angle sensor 30 and a vehicle speed sensor 32.

The processing device 10 may be configured with a processor including a CPU. The function of the processing device 10 may be implemented by hardware, software, firmware, or any combination thereof. For example, any part or all of the functions of the processing device 10 may be implemented by an ASIC (application-specific integrated circuit), a FPGA (Field Programmable Gate Array) or a DSP (digital signal processor). Further, the processing device 10 may be implemented by a plurality of processing devices. Further, any part or all of the functions of the processing device 10 may be implemented by a processing device which may be included in the rear radar sensor 20 or processing devices which may be included in the sensors 30 and 32.

The storage device 12 includes a writable storage device, and may include an EEPROM or the like. The storage device 12 may be implemented by a plurality of storage devices.

The rear radar 20 detects an existence of a neighboring vehicle behind the own vehicle and its status using an electric wave (millimeter wave, for example), a light wave (laser, for example) or a ultrasonic wave as a detection wave. The rear radar 20 detects information which represents a relationship between the neighboring vehicle and the own vehicle such as a relative speed, a relative distance and a direction (a lateral position) with respect to the own vehicle, at a predetermined cycle. It is noted that if the rear radar 20 is a millimeter wave radar sensor, the millimeter wave radar sensor may be of an electronic controlled scanning type, for example. In this case, the relative speed of the neighboring vehicle is detected using a Doppler frequency (frequency shift) of the electric wave, the relative distance of the neighboring vehicle is detected using a delayed time of the reflection wave, and the direction of the neighboring vehicle is detected based on a shift difference of the received waves between a plurality of reception antennas. It is noted that the rear radar sensor 20 may be a shared one which is used to predict a crash with respect to the neighboring vehicle behind the own vehicle (a radar sensor for a pre-crash system, for example).

The steering angle sensor 30 outputs an electric signal according to a steering angle of a steering wheel of the vehicle. The processing device 10 calculates the steering angle of the steering wheel based on the output signal of the steering angle sensor 30.

The vehicle speed sensor 32 outputs an electric signal (vehicle speed pulse) according to the rotational speed of vehicle wheels. The processing device 10 calculates the vehicle speed based on the output signal of the vehicle speed sensor 32. It is noted that the vehicle speed may be detected or estimated based on other sensors. For example, the vehicle speed may be detected based on the number of revolutions per minute of the output shaft of the transmission or based on a change manner of the vehicle position in time series calculated by a GPS receiver.

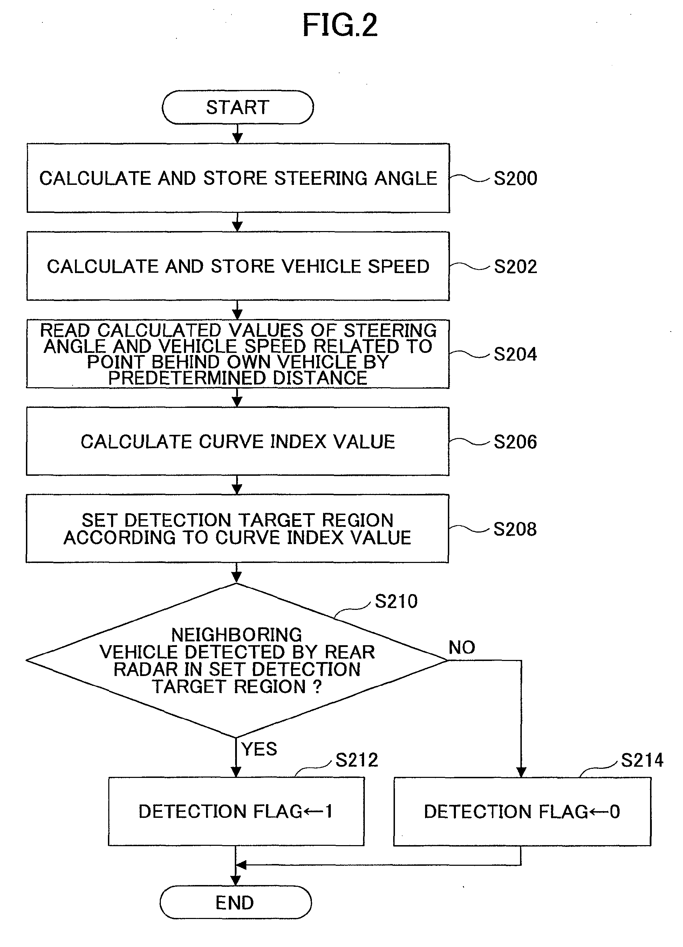

Fig. 2 is a flowchart for illustrating an example of a neighboring vehicle detecting process executed by the processing device 10 according to the first embodiment. A process routine illustrated in Fig. 2 may be executed repeatedly at a predetermined cycle during the traveling of the vehicle. Alternatively, the process routine illustrated in Fig. 2 may be executed repeatedly at a predetermined cycle during the traveling of the vehicle, if a predetermined drive support control (Lane Change Assist (LCA) control, for example) is performed.

In step S200, the processing device 10 calculates the steering angle of the steering wheel based on the output signal of the steering angle sensor 30, and stores it in the storage device 12. With respect to the steering angle of the steering wheel, calculated values of the latest predetermined cycles may be stored in the storage device 12 with a FIFO (first-in, first-out) rule. The number of the predetermined cycles may be determined such that the calculated value of the steering angle at the time necessary to derive a curve index value described hereinafter can be read.

In step S202, the processing device 10 calculates the vehicle speed based on the output signal of the vehicle speed sensor 32, and stores it in the storage device 12. With respect to the vehicle speed, calculated values of the latest predetermined cycles may be stored in the storage device 12 with a FIFO rule. The number of the predetermined cycles may be determined such that the calculated value of the vehicle speed at the time necessary to derive a curve index value described hereinafter can be read.

In step S204, the processing device 10 reads the calculated value of the steering angle and the calculated value of the vehicle speed related to a position which is a predetermined distance L1 behind the own vehicle. The predetermined distance L1 is a parameter to be determined according to an application (i.e., a type of the drive support) which uses the detection result of the neighboring vehicle. For example, if the detection result of the neighboring vehicle is utilized in the lane change assist control, the predetermined distance L1 may correspond to a maximum spaced distance of the neighboring vehicle behind the own vehicle to be detected (60 m, for example) or one-half thereof (i.e., a distance to a midpoint). Further, the calculated values of the steering angle and the vehicle speed to be read may be all or a part of the calculated values of the steering angle and the vehicle speed obtained in a section behind a position, which is behind the own vehicle by the predetermined distance L1, and a section of the predetermined distance L1 behind the own vehicle, and depends on a way of calculating the curve index value described hereinafter. This is described with reference to the next step S206.

In step S206, the processing device 10 calculates the curve index value based on the calculated values of the steering angle and the vehicle speed which have been read in step S204. The curve index value may directly or indirectly represent a curvature radius of a curved road behind the own vehicle. For example, the curve index value may be the curvature radius of the curved road behind the own vehicle, or a difference or ratio between the curvature radius of the curved road behind the own vehicle and the curvature radius of the road at the current vehicle position. It is noted that in the latter case in order to consider the curvature radius of the road at the current vehicle position, the calculated values of the steering angle and the vehicle speed read in step S204 may include the calculated values at this cycle.

Here, as an example, an explanation is continued assuming that the curve index value is the curvature radius of the curved road behind the own vehicle In this case, it may be assumed that the curvature radius R corresponds to the radius at the time of cornering of the vehicle, and the processing device 10 may calculate the curvature radius R of the curved road behind the own vehicle based on the following relationship, for example.

$$R = R_0 \ (1 - A \cdot V^2) \qquad \text{formula (1)}$$

Here, $R_0$ corresponds to a cornering radius at the vehicle speed 0, and $R = l/\theta f$ where $l$ is a wheelbase and $\theta f$ is an actual steering angle of a front wheel. Further, in the formula (1), A is a coefficient (stability factor) which is determined according to a vehicle mass, cornering power characteristics of the front and rear wheels, horizontal distances from a front axle and a rear axle to a gravity center, etc. It is noted that the steering angle and the actual steering angle $\theta f$ have a certain relationship depending on a steering gear ratio (known value).

For example, the processing device 10 calculates the curvature radius R of the curved road which is behind the own vehicle by the predetermined distance L1, by substituting, into the formula (1), the calculated values of the steering angle and the vehicle speed obtained at the position which is behind the own vehicle by the predetermined distance L1. Alternatively, the processing device 10 calculates an average of the curvature radius R of the curved road behind the own vehicle by the predetermined distance L1, based on the calculated values of the steering angle and the vehicle speed obtained at a plurality of positions which are located before and after the position behind the own vehicle by the predetermined distance L1. Alternatively, the processing device 10 calculates an average of the curvature radius R of the curved road behind the own vehicle, based on the calculated values of the steering angle and the vehicle speed obtained over a range which is from the position behind the own vehicle by the predetermined distance L1 to the current vehicle position.

Here, in fact, the calculated values of the steering angle and the vehicle speed are stored in time series, and thus it is difficult to precisely identify, among the calculated values in the storage device 12, the calculated values of the steering angle and the vehicle speed which were obtained at the position behind the own vehicle by the predetermined distance L1, for example. Thus, retrieving the calculated values of the steering angle and the vehicle speed which were obtained at the position behind the own vehicle by the predetermined distance L1 may be implemented by retrieving the calculated values of the steering angle and the vehicle speed which were obtained at the time which is a predetermined time $\Delta T$ (predetermined cycles) before the current time. In this case, the predetermined time $\Delta T$ may be derived by dividing the predetermined distance L1 by the current vehicle speed V. Alternatively, traveling distances from the respective timings of obtaining the steering angle and the vehicle speed may be calculated based on the history of the vehicle speed from the respective timings of obtaining the steering angle and the vehicle speed, and the calculated values of the steering angle and the vehicle speed which were obtained at the position behind the own vehicle by the predetermined distance L1 may be identified based on the calculation results of the traveling distances.

For example, if the predetermined distance is 60 m and the current vehicle speed is 30 m/s, the calculated values of the steering angle and the vehicle speed which were obtained two seconds before may be substituted into the formula (1) to calculate the curvature radius R of the curved road behind the own vehicle by the predetermined distance L1. Alternatively, the processing device 10 calculates an average of the curvature radius R of the curved road behind the own vehicle by the predetermined distance L1, based on the calculated values of the steering angle and the vehicle speed obtained at a plurality of points before and after the point which is two seconds before the current time. Alternatively, the processing device 10 calculates an average of the curvature radius R of the curved road behind the own vehicle, based on all the calculated values of the steering angle and the vehicle speed obtained during the past two seconds.

In step S208, the processing device 10 sets the detection target region according to the curve index value which has been calculated in step S206. In the case of the rear radar sensor 20 of the electronic controlled scanning type, the detection target region may be a part of a detection region of the rear radar sensor 20. In the case of the rear radar sensor 20 of a mechanical scanning type, the detection target region may correspond to a scanning region (range) of the rear radar sensor 20. The detection target region is set such that the neighboring vehicle on the lane which has the predetermined relationship with the traveling lane of the own vehicle can be recognized. Here, as an example, the detection target region is set such that the neighboring vehicle on the lane (also referred to as "neighboring lane", hereinafter) which is next to the traveling lane of the own vehicle on the right side can be recognized. Here, a positional relationship (including an angular relationship) between an area of the neighboring lane and the own vehicle behind the own vehicle changes according to the curvature radius of the road of the area of the neighboring lane, that is to say, the curvature radius R of the curved road behind the own vehicle. Thus, the processing device 10 considers the curvature radius R of the curved road behind the own vehicle in setting the detection target region based on the curve index value calculated in step S206. Specifically, the detection target region is set such that the detection target region covers only the neighboring lane of the curved road of the curvature radius R behind the own vehicle and does not include other lanes (the traveling lane of the own vehicle, for example). Such a detection target region may be derived in advance, for the respective curved roads of a plurality of the curvature radiuses R, based on experiments or calculations. Specifically, which part of the detection region of the rear radar sensor 20 covers the region of the neighboring lane of the curved road behind the own vehicle may be determined, based on experiments or calculations, for the respective curved roads of the plurality of the curvature radiuses R, and the respective detection target region according to the curvature radiuses R may be prepared. In this case, a map in which the respective curve index values corresponding to the curvature radiuses R are associated with the detection target regions 22a may be made and held. In this case, the processing device 10 may select, from the map, the detection target region according to the curve index value calculated in step S206.

In step S210, the processing device 10 determines, based on the detection result of the rear radar sensor 20 in the detection target region set in step S208, whether the neighboring vehicle exists in the detection target region set in step S208. If the neighboring vehicle exists in the detection target region, the process routine goes to step S212, but if the neighboring vehicle does not exist in the detection target region, the process routine goes to step S214.

In step S212, the processing device 10 sets a value of a detection flag to "1" to indicate that the neighboring vehicle exists in the set detection target region.

In step S214, the processing device 10 sets a value of a detection flag to "0" to indicate that the neighboring vehicle does not exist in the set detection target region.

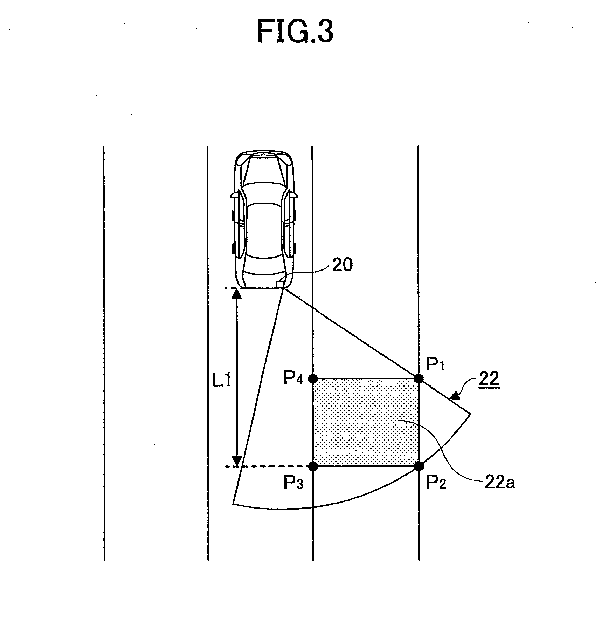

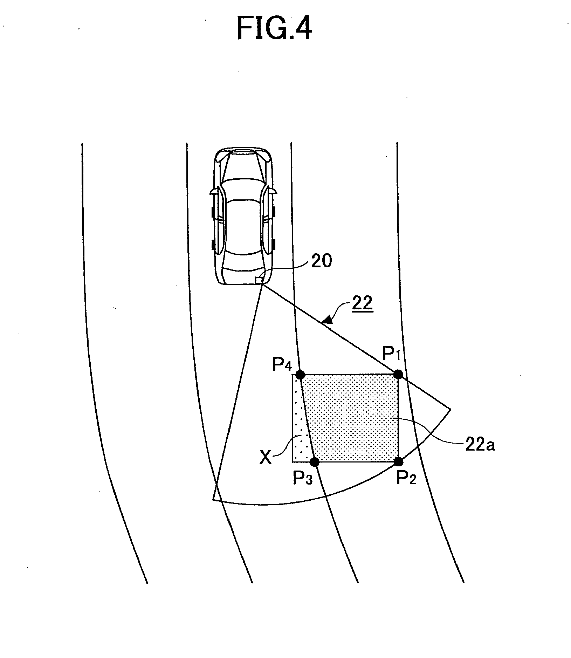

Fig. 3 and Fig. 4 are plan views of examples of the detection target region set by the processing device 10. Fig. 3 is a diagram for illustrating an example of the detection target region in a case where a road behind the own vehicle is straight. Fig. 4 is a diagram for illustrating an example of the detection target region in a case where a road behind the own vehicle is curved.

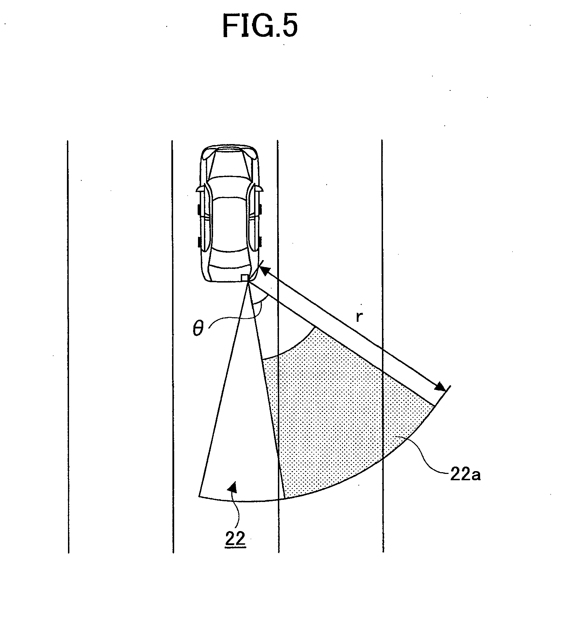

In Fig. 3 and Fig. 4, the detection region of the rear radar sensor 20 is indicated by a reference numeral 22. In the illustrated example, the detection region 22 of the rear radar sensor 20 is schematically illustrated such that it has a shape of a sector; however, the detection region 22 may have any shape. Further, in Fig. 3 and Fig. 4, the detection target region is indicated by a reference numeral 22a. In the illustrated example, the detection target region 22a is set as an internal region of a quadrangle defined by four points P1 through P4. However, the detection target region 22a with any shape may be set in the detection region 22. For example, as illustrated in Fig. 5, the detection target region 22a may be set as an internal region of a sector defined by a radius r and an angle θ. Here, an explanation is continued assuming that the detection target region 22a is set as an internal region of the rectangle defined by four points P1 through P4, as illustrated in Fig. 3 and Fig. 4. For example, in the case of the lane change assist control, the rear points of the detection target region 22a (coordinates of the points P2 and P3 in the back-and-forth direction) may corresponds to a point (i.e., a point behind the own vehicle by the predetermined distance L1) corresponding to the maximum spaced distance of the neighboring vehicle behind the own vehicle to be detected by the rear radar sensor 20.

As described above, in a preferred embodiment, the detection target region 22a is set such that the detection target region covers only the neighboring lane behind the own vehicle and does not include other lanes (the traveling lane of the own vehicle, for example). Here, the region which covers only the neighboring lane behind the own vehicle and does not include other lanes (the traveling lane of the own vehicle, for example) changes according to the curvature radius of the road behind the own vehicle, as illustrated in Fig. 3 and Fig. 4. Specifically, if the detection target region 22a in the case where the road behind the own vehicle is straight were set as is the case where the road behind the own vehicle is curved, the detection target region 22a would include the region of the traveling lane of the own vehicle, as indicated by a region X in Fig. 4. In contrast, according to the embodiment, as described above, the detection target region 22a is set according to the curve index value (which directly or indirectly represents the curvature radius of the curved road behind the own vehicle). For example, as illustrated in Fig. 3, if the road behind the own vehicle is curved, the detection target region 22a is set such that the detection target region 22a does not substantially include lanes (the traveling lane of the own vehicle, for example) other than the neighboring lane according to the curvature radius of the curved road. Thus, as illustrated in Fig. 4, the detection target region 22a is set such that the detection target region 22a does not include a region X. Therefore, according to the embodiment, it is possible to distinguish, with high accuracy, the neighboring vehicle on the neighboring lane behind the own vehicle from the neighboring vehicle on other lanes behind the own vehicle. In other words, according to the embodiment, it is possible to effectively prevent such an error that the neighboring vehicle on other lanes behind the own vehicle is erroneously detected as the neighboring vehicle on the neighboring lane behind the own vehicle. It is noted that, in the example illustrated in Fig. 3 and Fig. 4, a map which defines a relationship between the curve index values and the corresponding detection target regions 22a (coordinates of four points P1 through P4) may be generated in advance and held.

Further, according to the embodiment, as described above, the curve index value is calculated based on the detection results of the steering angle sensor 30 and the vehicle speed sensor 32 (calculated values of the steering angle and the vehicle speed stored in the storage device 12) which were obtained during the actual traveling. Therefore, according to the embodiment, it is possible to easily calculate the curve index value behind the own vehicle with high accuracy. Further, using the existing calculated values of the sensors such as the steering angle sensor 30 and the vehicle speed sensor 32 eliminates the necessity of additional processing and an inexpensive configuration can be implemented.

[Second Embodiment]

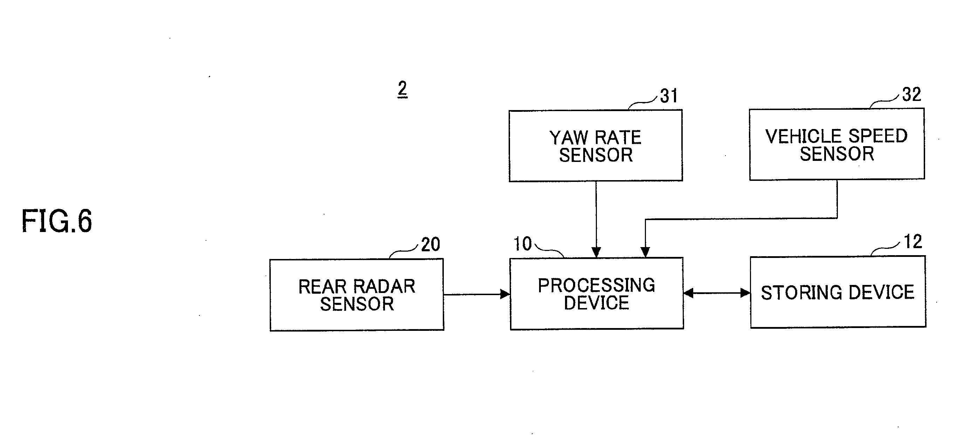

Fig. 6 is a diagram for illustrating a main configuration of a neighboring vehicle detecting device 2 according to another embodiment (second embodiment) of the present invention.

The neighboring vehicle detecting device 2 differs from the neighboring vehicle detecting device 1 according to the first embodiment described above mainly in that the neighboring vehicle detecting device 2 includes a yaw rate sensor 31 instead of the steering angle sensor 30. Elements which may be the same as the corresponding elements are given the same reference numerals and their explanation is omitted. It is noted that the hardware configuration of the processing device 10 may be the same as that in the first embodiment described above; however, the processing device 10 has a different function as described hereinafter.

The yaw rate sensor 31 outputs an electric signal according to a yaw rate generated in the vehicle in which the yaw rate sensor 31 is mounted. The processing device 10 calculates the yaw rate generated in the vehicle based on the output signal of the yaw rate sensor 31. It is noted that the yaw rate sensor 31 may be attached under a center consol of the vehicle, for example. The yaw rate sensor 31 may be a semiconductor sensor which integrally includes an acceleration sensing part configure to output a signal according to acceleration in the back-and-forth direction or the lateral direction generated in the vehicle and a yaw rate sensing part configured to output a signal according to an angular speed generated around a gravity axis of the vehicle. It is noted that any part or all of the functions of the processing device 10 may be implemented by a processing device which may be included in the rear radar sensor 20 or processing devices which may be included in the sensors 31 and 32.

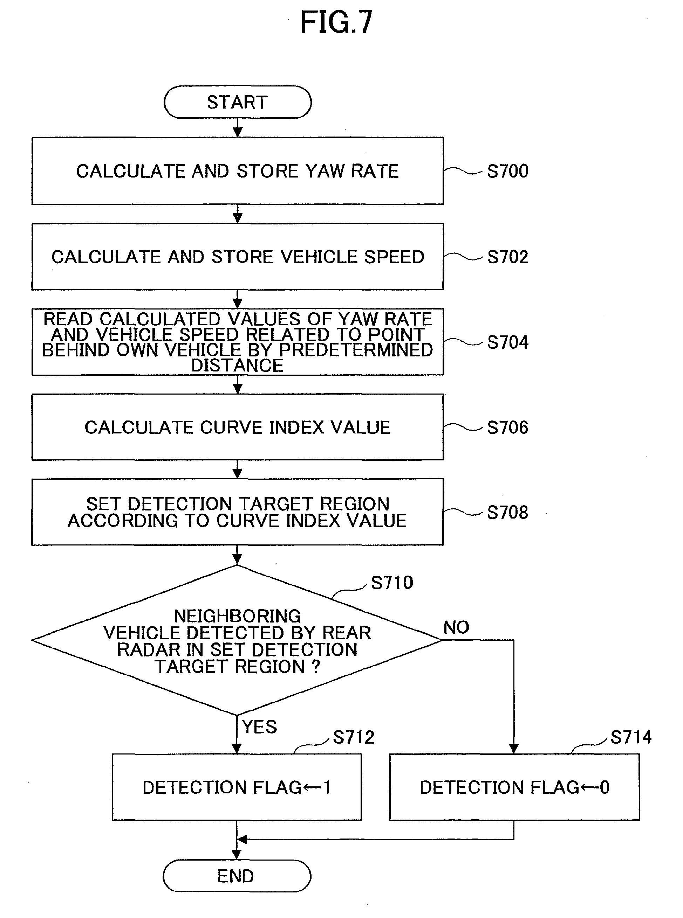

Fig. 7 is a flowchart for illustrating an example of a neighboring vehicle detecting process executed by the processing device 10 according to the second embodiment. A process routine illustrated in Fig. 7 may be executed repeatedly at a predetermined cycle during the traveling of the vehicle. Alternatively, the process routine illustrated in Fig. 7 may be executed repeatedly at a predetermined cycle during the traveling of the vehicle, if a predetermined drive support control (Lane Change Assist control, for example) is performed.

In step S700, the processing device 10 calculates the yaw rate based on the output signal of the yaw rate sensor 31, and stores it in the storage device 12. With respect to the yaw rate, calculated values of the latest predetermined cycles may be stored in the storage device 12 with a FIFO rule. The number of the predetermined cycles may be determined such that the calculated value of the yaw rate at the time necessary to derive a curve index value described hereinafter can be read.

In step S702, the processing device 10 calculates the vehicle speed based on the output signal of the vehicle speed sensor 32, and stores it in the storage device 12. With respect to the vehicle speed, calculated values of the latest predetermined cycles may be stored in the storage device 12 with a FIFO rule. The number of the predetermined cycles may be determined such that the calculated value of the vehicle speed at the time necessary to derive a curve index value described hereinafter can be read.

In step S704, the processing device 10 reads the calculated value of the yaw rate and the calculated value of the vehicle speed related to a position which is a predetermined distance L1 behind the own vehicle. The predetermined distance L1 may be as described with reference to the first embodiment. Further, the calculated values of the yaw rate and the vehicle speed to be read may be all or a part of the calculated values of the yaw rate and the vehicle speed obtained in a section behind a position, which is behind the own vehicle by the predetermined distance L1, and a section of the predetermined distance L1 behind the own vehicle, and depends on a way of calculating the curve index value described hereinafter. This is described with reference to the next step 706.

In step S706, the processing device 10 calculates the curve index value based on the calculated values of the yaw rate and the vehicle speed which have been read in step S704. The curve index value may directly or indirectly represent a curvature radius of a curved road behind the own vehicle. The curve index value may be the curvature radius of the curved road behind the own vehicle, or a difference or ratio between the curvature radius of the curved road behind the own vehicle and the curvature radius of the road at the current vehicle position. It is noted that in the latter case the calculated values of the yaw rate and the vehicle speed read in step S704 may include the calculated values at this cycle.

Here, as an example, an explanation is continued assuming that the curve index value is the curvature radius of the curved road behind the own vehicle. In this case, it may be assumed that the curvature radius R corresponds to the radius at the time of the vehicle cornering, and the processing device 10 may calculate the curvature radius R of the curved road behind the own vehicle based on the following relationship, for example.

$$R=V/\gamma \qquad \text{formula (2)}$$

Where $\gamma$ is a yaw rate.

For example, the processing device 10 calculates the curvature radius R of the curved road which is behind the own vehicle by the predetermined distance L1, by substituting, into the formula (2), the calculated values of the yaw rate and the vehicle speed obtained at the position which is behind the own vehicle by the predetermined distance L1. Alternatively, the processing device 10 calculates an average of the curvature radius R of the curved road behind the own vehicle by the predetermined distance L1, based on the calculated values of the yaw rate and the vehicle speed obtained at a plurality of positions which are located before and after the position behind the own vehicle by the predetermined distance L1. Alternatively, the processing device 10 calculates an average of the curvature radius R of the curved road behind the own vehicle, based on the calculated values of the yaw rate and the vehicle speed obtained from the position behind the own vehicle by the predetermined distance L1 to the current vehicle position.

Here, in fact, the calculated values of the yaw rate and the vehicle speed are stored in time series, and thus it is difficult to precisely identify, among the calculated values in the storage device 12, the calculated values of the yaw rate and the vehicle speed which were obtained at the position behind the own vehicle by the predetermined distance L1, for example. Thus, retrieving the calculated values of the yaw rate and the vehicle speed which were obtained at the position behind the own vehicle by the predetermined distance L1 may be implemented by retrieving the calculated values of the yaw rate and the vehicle speed which were obtained at the time which is a predetermined time $\Delta T$ (predetermined cycles) before the current time. In this case, the predetermined time $\Delta T$ may be derived by dividing the predetermined distance L1 by the current vehicle speed V. Alternatively, traveling distances from the respective timings of obtaining the yaw rate and the vehicle speed may be calculated based on the history of the vehicle speed from the respective timings of obtaining the yaw rate and the vehicle speed, and the calculated values of the yaw rate and the vehicle speed which were obtained at the position behind the own vehicle by the predetermined distance L1 may be identified based on the calculation results of the traveling distances.

For example, if the predetermined distance is 60 m and the current vehicle speed is 30 m/s, the calculated values of the yaw rate and the vehicle speed which were obtained two seconds before may be substituted into the formula (2) to calculate the curvature radius R of the curved road behind the own vehicle by the predetermined distance L1. Alternatively, the processing device 10 calculates an average of the curvature radius R of the curved road behind the own vehicle by the predetermined distance L1, based on the calculated values of the yaw rate and the vehicle speed obtained at a plurality of points before and after the point which is two seconds before the current time. Alternatively, the processing device 10 calculates an average of the curvature radius R of the curved road behind the own vehicle, based on all the calculated values of the yaw rate and the vehicle speed obtained during the past two seconds.

The processes of step S708 through step S714 may be the same as those of step S208 through step S214 in Fig. 2 described above, respectively.

According to the second embodiment, as in the first embodiment, it is possible to distinguish, with high accuracy, the neighboring vehicle on the neighboring lane behind the own vehicle from the neighboring vehicle on other lanes behind the own vehicle. In other words, according to the embodiment, it is possible to effectively prevent such an error that the neighboring vehicle on other lanes is erroneously detected as the neighboring vehicle on the neighboring lane behind the own vehicle. Further, according to the embodiment, as described above, the curve index value is calculated based on the detection results of the yaw rate sensor 31 and the vehicle speed sensor 32 (calculated values of the yaw rate and the vehicle speed stored in the storage device 12) which were obtained during the actual traveling. Therefore, according to the embodiment, it is possible to easily calculate the curve index value behind the own vehicle with high accuracy. Further, using the existing calculated values of the sensors such as the yaw rate sensor 31 and the vehicle speed sensor 32 eliminates the necessity of additional processing and an inexpensive configuration can be implemented.

[Third Embodiment]

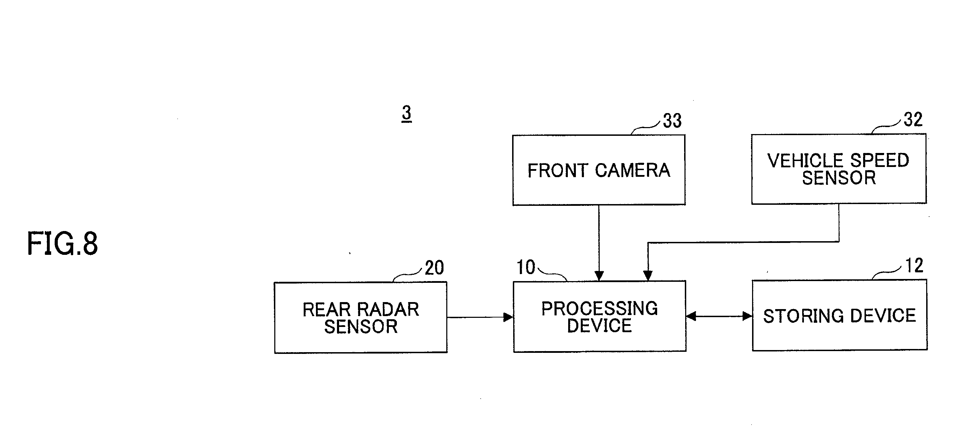

Fig. 8 is a diagram for illustrating a main configuration of a neighboring vehicle detecting device 3 according to another embodiment (third embodiment) of the present invention.

The neighboring vehicle detecting device 3 differs from the neighboring vehicle detecting device 1 according to the first embodiment described above mainly in that the neighboring vehicle detecting device 3 includes a front camera 33 instead of the steering angle sensor 30. Elements which may be the same as the corresponding elements are given the same reference numerals and their explanation is omitted. It is noted that the hardware configuration of the processing device 10 may be the same as that in the first embodiment described above; however, the processing device 10 has a different function as described hereinafter.

The front camera 33 captures an image of a scene in front of the vehicle (i.e., a front circumstance image) with image sensing elements such as CCD (charge-coupled device) and CMOS (complementary metal oxide semiconductor). The front camera 33 is installed in the vehicle such that it can image the scene in front of the vehicle. For example, the front camera 33 is attached to a back side of a room mirror (i.e., a surface facing to the front side of the vehicle). The front camera 33 may obtain the front circumstance image in real time during driving of the vehicle, and supply the processing device 10 with the front circumstance image in an image data stream at every predetermined frame cycle. It is noted that the front camera 33 may be shared for other applications (a camera used for monitoring a front scene, a camera used for a lane keep assist control, a camera used for controlling light distribution, etc). It is noted that any part or all of the functions of the processing device 10 may be implemented by a processing device which may be included in the rear radar sensor 20 or processing devices which may be included in the front camera 33, etc.

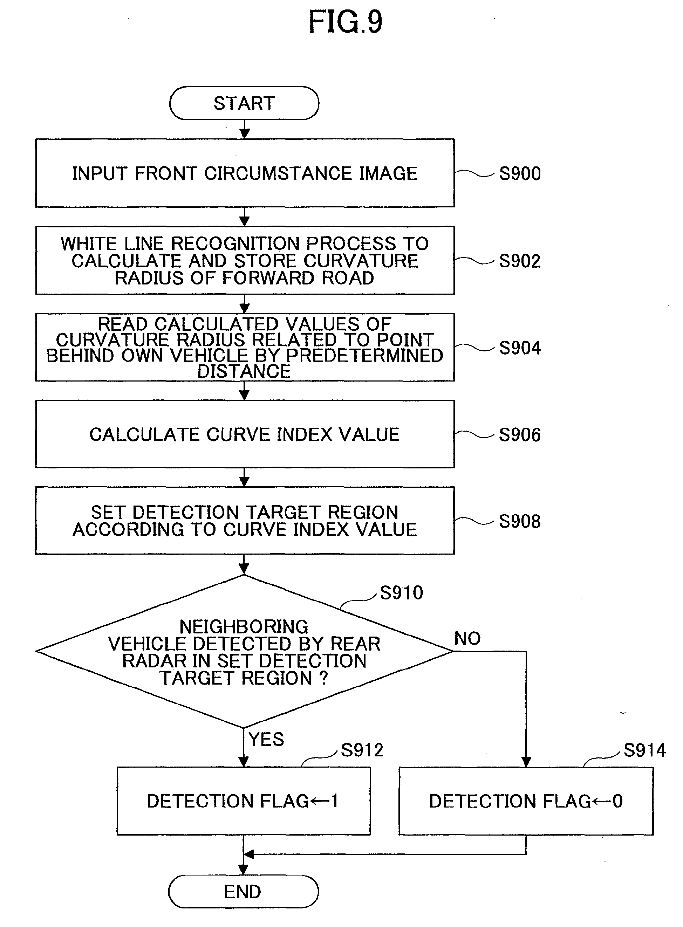

Fig. 9 is a flowchart for illustrating an example of a neighboring vehicle detecting process executed by the processing device 10 according to the third embodiment. A process routine illustrated in Fig. 9 may be executed repeatedly at a predetermined cycle during the traveling of the vehicle. Alternatively, the process routine illustrated in Fig. 9 may be executed repeatedly at a predetermined cycle during the traveling of the vehicle, if a predetermined drive support control (Lane Change Assist control, for example) is performed.

In step S900, the processing device 10 receives the front circumstance image input from the front camera 33.

In step S902, the processing device 10 processes the front circumstance image input from the front camera 33 to recognize a white line included in the front circumstance image. There are various ways of recognizing the white line, and any way may be used. For example, the white line may be recognized utilizing a pattern of the white line (a feature that white lines exist in a pair, for example) or a luminance difference with respect to the surrounding area. Further, the processing device 10 calculates the curvature radius of the recognized white line and stores it in the storage device 12. With respect to the curvature radius of the white line, calculated values of the latest predetermined cycles may be stored in the storage device 12 with a FIFO rule. The number of the predetermined cycles may be determined such that the calculated value of the curvature radius at the time necessary to derive a curve index value described hereinafter can be read.

In step S904, the processing device 10 reads the calculated value of the curvature radius of the white line and the calculated value of the vehicle speed related to a position which is a predetermined distance L1 behind the own vehicle. The predetermined distance L1 may be as described with reference to the first embodiment. Further, the calculated values of the curvature radius of the white line to be read may be all or a part of the calculated values of the curvature radius of the white line obtained in a section behind a position, which is behind the own vehicle by the predetermined distance L1, and a section of the predetermined distance L1 behind the own vehicle, and depends on a way of calculating the curve index value described hereinafter. This is described with reference to the next step S906.

In step S906, the processing device 10 calculates the curve index value based on the calculated values of the curvature radius of the white line and the vehicle speed which have been read in step S904. The curve index value may directly or indirectly represent a curvature radius of a curved road behind the own vehicle. The curve index value may be the curvature radius of the curved road behind the own vehicle, or a difference or ratio between the curvature radius of the curved road behind the own vehicle and the curvature radius of the road at the current vehicle position. It is noted that in the latter case the calculated values of the curvature radius of the white line read in step S904 may include the calculated value at this cycle.

For example, the processing device 10 may regard the curvature radius of the white line obtained at the position which is behind the own vehicle by the predetermined distance L1 as the curvature radius R of the curved road behind the own vehicle by the predetermined distance L1. Alternatively, the processing device 10 calculates an average of the curvature radius R of the curved road behind the own vehicle by the predetermined distance L1, based on the calculated values of the curvature radius of the white line obtained at a plurality of positions which are located before and after the position behind the own vehicle by the predetermined distance L1. Alternatively, the processing device 10 calculates an average of the curvature radius R of the curved road behind the own vehicle, based on the calculated values of the curvature radius of the white line obtained over a range which is from the position behind the own vehicle by the predetermined distance L1 to the current vehicle position.

Here, in fact, the calculated values of the curvature radius of the white line are stored in time series, and thus it is difficult to precisely identify, among the calculated values in the storage device 12, the calculated values of the curvature radius of the white line which were obtained at the position behind the own vehicle by the predetermined distance L1, for example. Thus, retrieving the calculated values of the curvature radius of the white line which were obtained at the position behind the own vehicle by the predetermined distance L1 may be implemented by retrieving the calculated values of the curvature radius of the white line which were obtained at the time which is a predetermined time ΔT (predetermined cycles) before the current time. In this case, the predetermined time ΔT may be derived by dividing the predetermined distance L1+L2 by the current vehicle speed V. The distance L2 may corresponds to a forward distance of the white line recognized by the front camera 33. Alternatively, traveling distances from the respective timings of obtaining the curvature radius of the white line may be calculated based on the history of the vehicle speed from the respective timings of obtaining the curvature radius of the white line, and the calculated values of the curvature radius of the white line which were obtained at the position behind the own vehicle by the predetermined distance L1 may be identified based on the calculation results of the traveling distances.

The processes of step S908 through step S914 may be the same as those of step S208 through step S214 in Fig. 2 described above, respectively.

According to the third embodiment, as in the first embodiment, it is possible to distinguish, with high accuracy, the neighboring vehicle on the neighboring lane behind the own vehicle from the neighboring vehicle on other lanes behind the own vehicle. In other words, according to the embodiment, it is possible to effectively prevent such an error that the neighboring vehicle on other lanes is erroneously detected as the neighboring vehicle on the neighboring lane behind the own vehicle. Further, according to the embodiment, as described above, the curve index value is calculated based on the detection results (recognition result) of the curvature radius of the white line (calculated values of the curvature radius of the white line stored in the storage device 12) which were obtained during the actual traveling. Therefore, according to the embodiment, it is possible to easily calculate the curve index value behind the own vehicle with high accuracy. Further, using the front camera 33 which can be used for other applications eliminates the necessity of additional elements and an inexpensive configuration can be implemented.

[Fourth Embodiment]

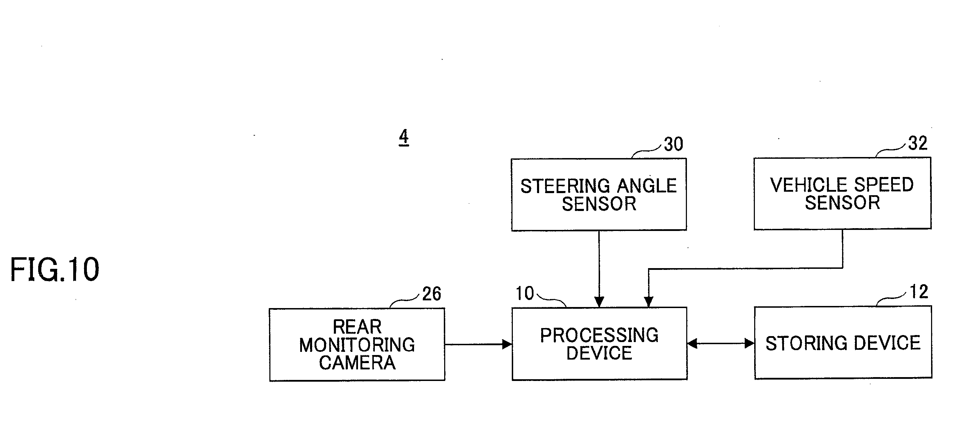

Fig. 10 is a diagram for illustrating a main configuration of a neighboring vehicle detecting device 4 according to another embodiment (fourth embodiment) of the present invention.

The neighboring vehicle detecting device 4 differs from the neighboring vehicle detecting device 1 according to the first embodiment described above mainly in that the neighboring vehicle detecting device 4 includes a rear monitoring camera 26 instead of the rear radar sensor 20. Elements which may be the same as the corresponding elements are given the same reference numerals and their explanation is omitted. It is noted that the hardware configuration of the processing device 10 may be the same as that in the first embodiment described above; however, the processing device 10 has a different function as described hereinafter.

The rear monitoring camera 26 captures an image of a scene behind the own vehicle (i.e., a rear circumstance image) with image sensing elements such as CCD and CMOS. The rear monitoring camera 26 is installed in the vehicle such that it can image the scene behind the vehicle. For example, the rear monitoring camera 26 is attached to a rear door. The rear monitoring camera 26 may include a wide-angle lens to capture a wide range of the scene behind the vehicle or capture the region which is located behind the own vehicle in the right direction (see the detection region 22 in Fig. 3). The rear monitoring camera 26 may obtain the rear circumstance image in real time during driving of the vehicle, and supply the processing device 10 with the rear circumstance image in an image data stream at every predetermined frame cycle. It is noted that any part or all of the functions of the processing device 10 may be implemented by a processing device which may be included in the rear monitoring camera 26, etc.

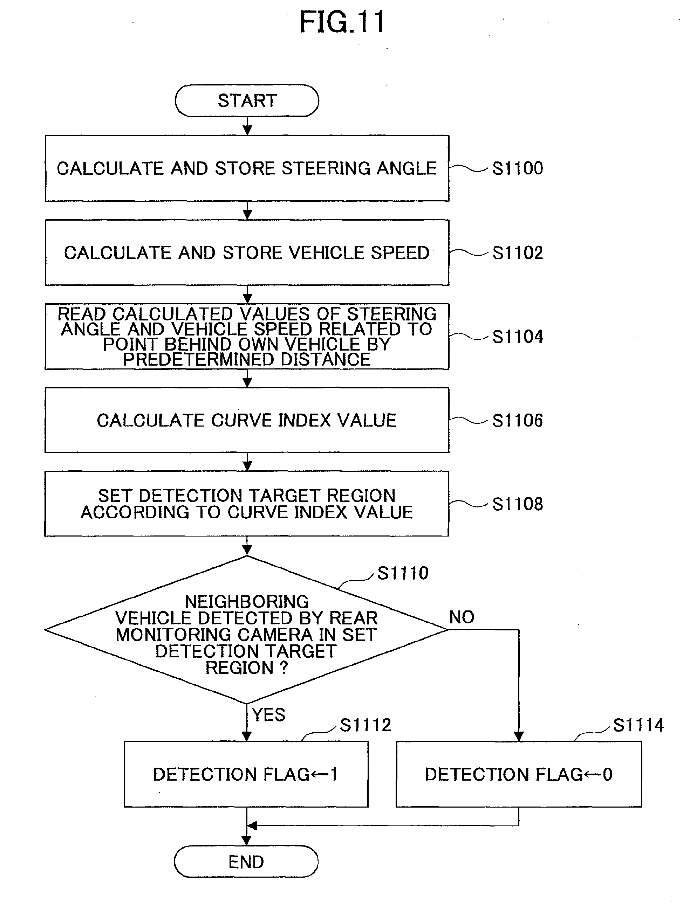

Fig. 11 is a flowchart for illustrating an example of a neighboring vehicle detecting process executed by the processing device 10 according to the fourth embodiment. A process routine illustrated in Fig. 11 may be executed repeatedly at a predetermined cycle during the traveling of the vehicle. Alternatively, the process routine illustrated in Fig. 11 may be executed repeatedly at a predetermined cycle during the traveling of the vehicle, if a predetermined drive support control (Lane Change Assist control, for example) is performed.

The processes of step S1100 through S1106 may be the same as those of step S200 through step S206 in Fig. 2 described above, respectively.

In step S1108, the processing device 10 sets a detection target region according to the curve index value which has been calculated in step S1106. The detection target region may be a part of the detection region (imaging region) of the rear monitoring camera 26. An idea related to a way of setting the detection target region may be the same as that in the case of the first embodiment described above.

In step S1110, the processing device 10 identifies an image area of the rear circumstance image of the rear monitoring camera 26 corresponding to the detection target region set in step S1108 and determines whether the neighboring vehicle can be recognized in the image area. It is noted that there are various ways of recognizing the vehicle, and any way may be used. For example, the image recognition may be performed utilizing a shape of the vehicle (shape pattern), features or colors of lamps, features of motion, etc. If the neighboring vehicle can be recognized in the image area corresponding to the set detection target region, the process routine goes to step S1112, and if the neighboring vehicle cannot be recognized in the image area corresponding to the set detection target region, the process routine goes to step S1114.

The processes of step S1112 and step S1114 may be the same as those of step S212 and step S214 in Fig. 2 described above, respectively.

According to the fourth embodiment, the same effects as those of the first embodiment described above can be obtained. It is noted that the fourth embodiment can be combined with the second or third embodiment described above. In other words, in with the second or third embodiment described above, the rear monitoring camera 26 may be used instead of the rear radar sensor 20.

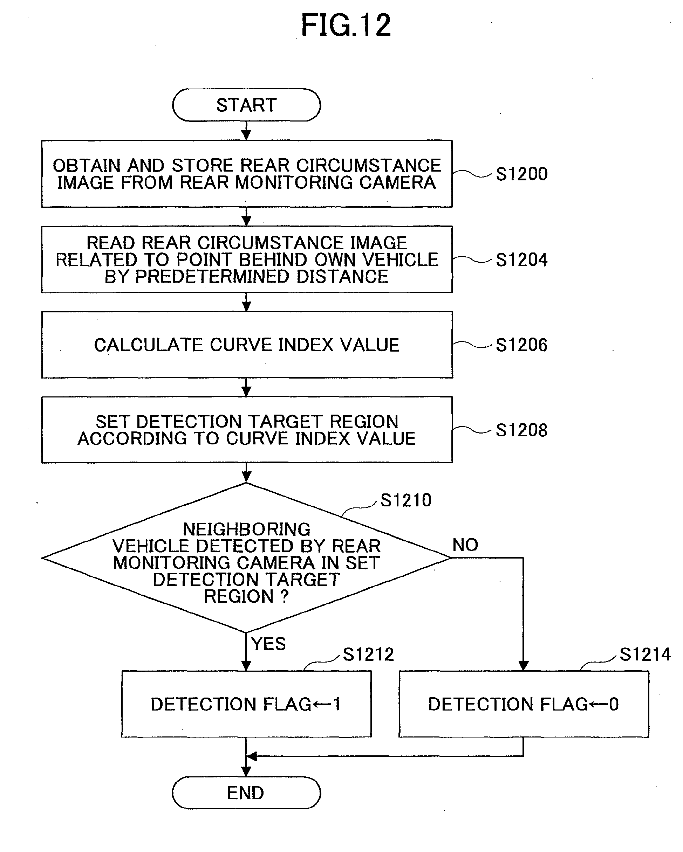

Fig. 12 is a flowchart for illustrating another example of a neighboring vehicle detecting process executed by the processing device 10 according to the fourth embodiment.

A process routine illustrated in Fig. 12 may be executed repeatedly at a predetermined cycle during the traveling of the vehicle. Alternatively, the process routine illustrated in Fig. 12 may be executed repeatedly at a predetermined cycle during the traveling of the vehicle, if a predetermined drive support control (Lane Change Assist control, for example) is performed.

In step S1200, the processing device 10 obtains the rear circumstance image from the rear monitoring camera 26 and stores it in the storage device 12. It is noted that the storage device 12 may be a RAM or the like.

In step S1204, the processing device 10 reads the rear circumstance image related to a position which is a predetermined distance L1 behind the own vehicle. The predetermined distance L1 may be as described with reference to the first embodiment.

In step S1206, the processing device 10 processes the rear circumstance image to recognize the white line, which may be included in the rear circumstance image, and calculates the curve index value based on the curvature radius of the recognized white line. The curve index value may directly or indirectly represent a curvature radius of a curved road behind the own vehicle. It is noted that there are various ways of recognizing the white line, and any way may be used.

In step S1208, the processing device 10 sets the detection target region according to the curve index value which has been calculated in step S1106. The detection target region may be a part of the detection region (imaging region) of the rear monitoring camera 26. An idea related to a way of setting the detection target region may be the same as that in the case of the first embodiment described above.

In step S1210, the processing device 10 identifies an image area corresponding to the detection target region set in step S1208 in the latest rear circumstance image of the rear monitoring camera 26 and determines whether the neighboring vehicle can be recognized in the image area. It is noted that if the rear circumstance image used in step S1206 is the latest one, the rear circumstance image used in step S1210 is the same as that used in step S1206. It is noted that there are various ways of recognizing the vehicle, and any way may be used. For example, the image recognition may be performed utilizing a shape of the vehicle (shape pattern), features or colors of lamps, features of motion, etc. If the neighboring vehicle can be recognized in the image area corresponding to the set detection target region, the process routine goes to step S1212, and if the neighboring vehicle cannot be recognized in the image area corresponding to the set detection target region, the process routine goes to step S1214.

The processes of step S1212 and step S1214 may be the same as those of step S212 and step S214 in Fig. 2 described above, respectively.

[Fifth Embodiment]

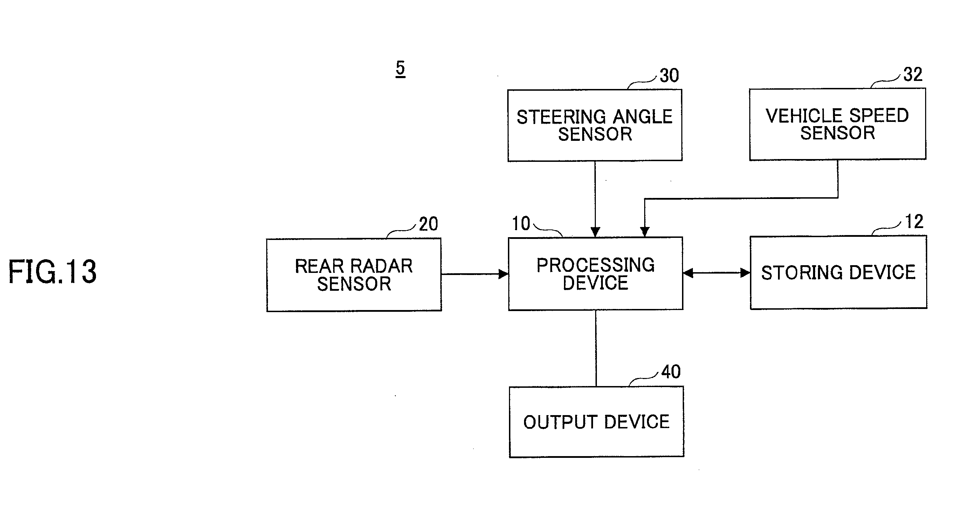

Fig. 13 is a diagram for illustrating a main configuration of a neighboring vehicle detecting device 5 according to another embodiment (fifth embodiment) of the present invention.

The neighboring vehicle detecting device 5 differs from the neighboring vehicle detecting device 1 according to the first embodiment described above mainly in that the neighboring vehicle detecting device 5 includes an output device 40. Elements which may be the same as the corresponding elements are given the same reference numerals and their explanation is omitted. It is noted that the hardware configuration of the processing device 10 may be the same as that in the first embodiment described above; however, the processing device 10 has a function as described hereinafter, in addition to the neighboring vehicle detecting function as described in the first embodiment.

The output device 40 may be of any type which can directly or indirectly output information which informs the driver of the vehicle of the existence of the neighboring vehicle. For example, the output device 40 may be a visual output device such as a display device, an acoustic output device such as a speaker, or a device which generates vibrations or forces which the driver can perceive.

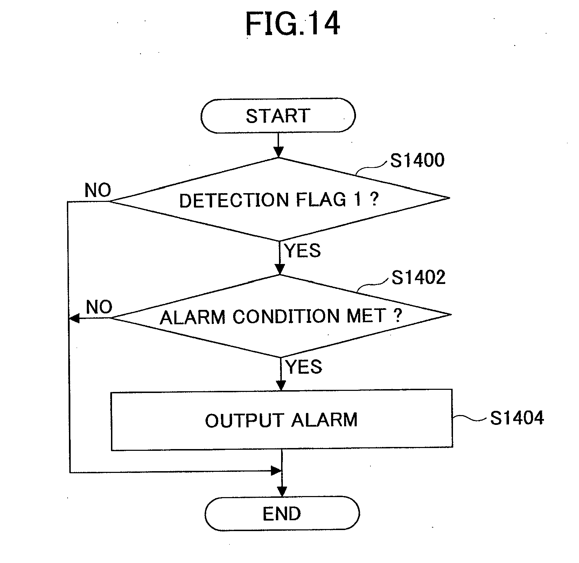

Fig. 14 is an example of a flowchart of a lane change assist control executed by the processing device 10. The process routine in Fig. 14 may be performed simultaneously with the neighboring vehicle detecting process in Fig. 2. The process routine in Fig. 14 may be performed during the lane change assist control, for example, is in its ON state.

In step S1400, the processing device 10 determines whether the detection flag is "1". If the detection flag is "1", that is to say, if the neighboring vehicle is detected in the detection target region behind the own vehicle, the process routine goes to step S1402. On the other hand, If the detection flag is "0", that is to say, if the neighboring vehicle is not detected in the detection target region behind the own vehicle, the process routines ends as it is, because it can be determined that an alarm or the like is not necessary.

In step S1400, the processing device 10 determines whether a predetermined alarm condition is met. The predetermined alarm condition may be set in terms of whether the neighboring vehicle detected in the detection target region behind the own vehicle should be reported to the driver of the own vehicle with an alarm. The predetermined alarm condition may be met if an intention of the driver of the own vehicle to change the lane to the neighboring lane is detected, for example. This intention may be detected based on an operation signal of a blinker lever (a turn signal lever), for example. Alternatively, the predetermined alarm condition may be met if the vehicle speed of the neighboring vehicle detected in the detection target region behind the own vehicle is greater than a predetermined vehicle speed. The predetermined vehicle speed may be set based on the current vehicle speed of the own vehicle. Alternatively, the determination of the predetermined alarm condition may be omitted. In other words, the determination process of step S1402 may be omitted. In this case, if the determination result in step S1400 is affirmative, the process routine directly goes to step S1404.

In step 1404, the processing device 10 outputs the information for informing the driver of the vehicle of the existence of the neighboring vehicle via the output device 40. For example, the processing device 10 may sound a buzzer, output a message such as "attention to the following vehicle", or causes a meter to turn on an alarm lamp for informing the driver of the vehicle of the existence of the neighboring vehicle.

According to the fifth embodiment, the lane change assist control can be performed with increased reliability by utilizing the accurate neighboring vehicle detection processing result according to the first embodiment described above. It is noted that the fifth embodiment can be combined with the second, third or fourth embodiment described above. In other words, in the fifth embodiment, the neighboring vehicle detection processing result according to the second, third or fourth embodiment described above may be used instead of that of the first embodiment described above.

The present invention is disclosed with reference to the preferred embodiments. However, it should be understood that the present invention is not limited to the above-described embodiments, and variations and modifications may be made without departing from the scope of the present invention.

For example, in the embodiments described above, in order to detect the neighboring vehicle behind the own vehicle, which is traveling on the lane next to the traveling lane of the own vehicle in the right direction, the rear radar sensor 20 has the detection region 22 in the right and rear direction (see Fig. 3); however, a mounting location (detection region 22) of the rear radar sensor 20 may be determined according to which lane with respect to the traveling lane of the own vehicle the neighboring vehicle behind the own vehicle to be detected travels. For example, if the neighboring vehicle behind the own vehicle which travels on the same lane as the own vehicle is to be detected, the rear radar sensor 20 may be mounted at the center of the vehicle. Further, if the neighboring vehicle behind the own vehicle which travels on a lane next to the traveling lane of the own vehicle in the left direction is to be detected, the rear radar sensor 20 may be mounted on the left side of the rear portion of the vehicle. Further, a combination thereof may be possible, and thus rear radar sensors 20 may be mounted on either side of the vehicle. Further, if the lane on which the target object travels changes, radar sensors may be used selectively. These are also true for the rear monitoring camera 26.

Further, according to the embodiments, as preferred embodiments, the detection target region 22a covers only the neighboring lane behind the own vehicle and does not include other lanes (the traveling lane of the own vehicle, for example). However, if the neighboring vehicle behind the own vehicle which travels on the same lane as the own vehicle is to be detected, the detection target region may be set such that the detection target region 22a covers only the traveling lane of the own vehicle and does not include other lanes (the neighboring lane, for example). In this way, the target lane may be any lane which has a certain relationship with the traveling lane of the own vehicle.

Further, the detection target region 22a may substantially cover only the neighboring lane behind the own vehicle. Thus, the detection target region 22a may include other lanes (the traveling lane of the own vehicle, for example) to some extent. This is because, in fact, due to the variety of the road widths, calculation accuracy of the curve index value, etc., it is practically impossible to set the detection target region 22a such that the detection target region 22a covers only the traveling lane of the own vehicle and does not include other lanes (the neighboring lane, for example) at all.

Further, according to the first embodiment, as a preferred embodiment, the steering angle and the vehicle speed are used in calculating the curve index value; however, only the steering angle may be used. For example, the steering angle itself may be utilized as a curve index value. Similarly, according to the second embodiment, as a preferred embodiment, the yaw rate and the vehicle speed are used in calculating the curve index value; however, only the yaw rate may be used. For example, the yaw rate itself may be utilized as a curve index value.

Further, in the embodiments described above, the lane change assist control is used as an example of the drive support control which utilizes the neighboring vehicle detection result; however, the neighboring vehicle detection result may be used effectively in the variety of the drive support controls. For example, the neighboring vehicle detection result may be used in a control for assisting to overtake the preceding vehicle as disclosed in Patent Document 1 described above.

It is noted that, in the embodiments described above, the neighboring vehicle which travels on a particular lane behind the own vehicle is detected; however, this is substantially equivalent to determining (identifying) the traveling lane of the neighboring vehicle behind the own vehicle. In other words, the embodiments described above may be equivalent embodiments of a device for determining the traveling lane of the neighboring vehicle behind the own vehicle.

**Claims**

1.  A neighboring vehicle detecting device, comprising:

    a neighboring vehicle detecting part (20, 26) configured to detect a neighboring vehicle behind an own vehicle;
    a curved road detecting part (30; 31; 33) configured to detect information related to a curvature radius of a curved road at predetermined cycle;
    a storing part (12) configured to store a detection result of the curved road detecting part; and
    a processing part (10) configured to retrieve from the storing part, based on information about a vehicle speed of the own vehicle, the information related to the curvature radius of the curved road which is located a predetermined distance behind a current position of the own vehicle, and set a detection target region behind the own vehicle based on the retrieved information, wherein the processing part detects the neighboring vehicle behind the own vehicle based on a detection result in the set detection target region by the neighboring vehicle detecting part, the neighboring vehicle traveling on a particular lane which has a predetermined relationship with a traveling lane of the own vehicle.

2.  The neighboring vehicle detecting device of claim 1, wherein the particular lane is the same as the traveling lane of the own vehicle or neighboring the traveling lane of the own vehicle in a left or right direction.

3.  The neighboring vehicle detecting device of claim 1 or 2, wherein the predetermined distance is set based on a detection area of the neighbouring vehicle detecting part.

4.  The neighboring vehicle detecting device of any one of claims 1 through 3, wherein the curved road detecting part includes one of a steering angle sensor, a yaw rate sensor, a front camera and a back camera.

5.  The neighboring vehicle detecting device of any one of claims 1 through 4, further comprising an output device (40), wherein
    if the processing part detects the neighboring vehicle, which is behind the own vehicle and traveling on the particular lane, the processing part outputs, with the output device, information for informing a driver of the own vehicle of an existence of the neighboring vehicle.

6.  A method of detecting a neighboring vehicle, comprising:

    detecting, with a curved road detecting part (30; 31; 33), information related to a curvature radius of a curved road at a predetermined cycle;
    storing, in a storing part (12), a detection result of the curved road detecting part;
    casing a processing part (10), to retrieve from the storming part, based on information about a vehicle speed of the own vehicle, the information related to the curvature radius of the curved road which is located a predetermined distance behind a current position of the own vehicle,
    causing the processing part to set a detection target region behind the own vehicle based on the retrieved information, and
    causing the processing part to detect the neighboring vehicle behind the own vehicle based on a detection result in the set detection target region by a neighboring vehicle detecting part (20; 26), the neighboring vehicle traveling on a particular lane which has a predetermined relationship with a traveling lane of the own vehicle.

**Patentansprüche**

1.  Nachbarfahrzeugerfassungsvorrichtung, mit
    einem Nachbarfahrzeugerfassungsabschnitt (20, 26), das dazu eingerichtet ist, um ein Nachbarfahrzeug hinter einem eigenen Fahrzeug zu erfassen,
    einem Kurvenstrassenerfassungsabschnitt (30, 31, 33), das dazu eingerichtet ist, um Informationen bezüglich eines Kurvenradius' einer Kurvenstrasse mit einem vorbestimmten Zyklus zu erfassen,

einem Speicherabschnitt (12), das dazu eingerichtet ist, um ein Erfassungsergebnis des Kurvenstrassenerfassungsabschnitts zu speichern, und

einem Verarbeitungsabschnitt (10), der dazu eingerichtet ist, um aus dem Speicherabschnitt basierend auf Informationen bezüglich einer Fahrzeuggeschwindigkeit des eigenen Fahrzeugs die Informationen bezüglich des Kurvenradius' der Kurvenstrasse abzurufen, die einen vorbestimmten Abstand hinter einer gegenwärtigen Position des eigenen Fahrzeugs angeordnet ist, und um eine Erfassungszielregion hinter dem eigenen Fahrzeug basierend auf den abgerufenen Informationen einzustellen, wobei der Verarbeitungsabschnitt das Nachbarfahrzeug hinter dem eigenen Fahrzeug basierend auf einem Erfassungsergebnis in der eingestellten Erfassungszielregion mittels des Nachbarfahrzeugerfassungsabschnitts erfasst, wobei sich das Nachbarfahrzeug auf einer bestimmten Fahrspur fortbewegt, die eine vorbestimmte Beziehung zu einer Fortbewegungsfahrspur des eigenen Fahrzeugs aufweist.

2. Nachbarfahrzeugerfassungsvorrichtung nach Anspruch 1, wobei die bestimmte Fahrspur die gleiche wie die Fortbewegungsfahrspur des eigenen Fahrzeugs oder benachbart zu der Fortbewegungsfahrspur des eigenen Fahrzeugs in einer Links- oder Rechts-Richtung ist.

3. Nachbarfahrzeugerfassungsvorrichtung nach Anspruch 1 oder 2, wobei der vorbestimmte Abstand basierend auf einem Erfassungsbereich des Nachbarfahrzeugerfassungsabschnitts eingestellt ist.

4. Nachbarfahrzeugerfassungsvorrichtung nach einem der Ansprüche 1 bis 3, wobei der Kurvenstrassenerfassungsabschnitt eines aus einem Lenkwinkelsensor, einem Gierratensensor, einer Frontkamera und einer Rückkamera aufweist.

5. Nachbarfahrzeugerfassungsvorrichtung nach einem der Ansprüche 1 bis 4, ferner mit einer Ausgabevorrichtung (40), wobei

wenn der Verarbeitungsabschnitt das Nachbarfahrzeug erfasst, das sich hinter dem eigenen Fahrzeug befindet und sich auf der bestimmten Fahrspur fortbewegt, der Verarbeitungsabschnitt mittels der Ausgabevorrichtung Informationen zur Information eines Fahrers des eigenen Fahrzeugs bezüglich einer Existenz des benachbarten Fahrzeugs ausgibt.

6. Verfahren eines Erfassens eines Nachbarfahrzeugs, mit

einem Erfassen von Informationen bezüglich eines Kurvenradius' einer Kurvenstrasse mit einem vorbestimmten Zyklus mittels eines Kurvenstrassenerfassungsabschnitts (30, 31, 33),

einem Speichern eines Erfassungsergebnisses des Kurvenstrassenerfassungsabschnitts in einem Speicherabschnitt (12), und

einem Bringen eines Verarbeitungsabschnitts (10) dazu, aus dem Speicherabschnitt basierend auf Informationen bezüglich einer Fahrzeuggeschwindigkeit des eigenen Fahrzeugs die Informationen bezüglich des Kurvenradius' der Kurvenstrasse abzurufen, die einen vorbestimmten Abstand hinter einer gegenwärtigen Position des eigenen Fahrzeugs angeordnet ist,

einem Bringen des Verarbeitungsabschnitts dazu, eine Erfassungszielregion hinter dem eigenen Fahrzeug basierend auf den abgerufenen Informationen einzustellen, und

einem Bringen des Verarbeitungsabschnitts dazu, das Nachbarfahrzeug hinter dem eigenen Fahrzeug basierend auf einem Erfassungsergebnis in der eingestellten Erfassungszielregion mittels eines Nachbarfahrzeugerfassungsabschnitts (20, 26) zu erfassen, wobei sich das Nachbarfahrzeug auf einer bestimmten Fahrspur fortbewegt, die eine vorbestimmte Beziehung zu einer Fortbewegungsfahrspur des eigenen Fahrzeugs aufweist.

**Revendications**

1. Dispositif de détection de véhicule voisin, comprenant :

une partie de détection de véhicule voisin (20 ; 26) configurée pour détecter un véhicule voisin derrière un propre véhicule ;
une partie de détection de route en virage (30 ; 31 ; 33) configurée pour détecter des informations relatives à un rayon de courbure d'une route en virage à un cycle prédéterminé ;
une partie de stockage (12) configurée pour stocker un résultat de détection de la partie de détection de route en virage ; et
une partie de traitement (10) configurée pour récupérer à partir de la partie de stockage, sur la base d'informations concernant une vitesse de véhicule du propre véhicule, les informations relatives au rayon de courbure de la route en virage qui est située à une distance prédéterminée derrière une position actuelle du propre véhicule, et pour définir une région cible de détection derrière le propre véhicule sur la base des informations récupérées, où la partie de traitement détecte le véhicule voisin derrière le propre véhicule sur la base d'un résultat de détection dans la région cible de détection définie par la partie de détection de véhicule voisin, le véhicule voisin circulant sur une voie particulière qui a une relation prédéterminée avec une voie de circulation du propre véhicule.

2. Dispositif de détection de véhicule voisin de la revendication 1, dans lequel la voie particulière est la même que la voie de circulation du propre véhicule ou voisine de la voie de circulation du propre véhicule dans une direction gauche ou droite.

3. Dispositif de détection de véhicule voisin de la revendication 1 ou 2, dans lequel la distance prédéterminée est définie sur la base d'une zone de détection de la partie de détection de véhicule voisin.

4. Dispositif de détection de véhicule voisin de l'une quelconque des revendications 1 à 3, dans lequel la partie de détection de route en virage comporte l'un(e) d'un capteur d'angle de braquage, d'un capteur de vitesse de lacet, d'une caméra avant et d'une caméra arrière.

5. Dispositif de détection de véhicule voisin de l'une quelconque des revendications 1 à 4, comprenant en outre un dispositif de sortie (40), dans lequel
si la partie de traitement détecte le véhicule voisin, qui est derrière le propre véhicule et circulant sur la voie particulière, la partie de traitement délivre en sortie, avec le dispositif de sortie, des informations pour informer un conducteur du propre véhicule d'une existence du véhicule voisin.

6. Procédé de détection d'un véhicule voisin, comprenant le fait :

de détecter, avec une partie de détection de route en virage (30 ; 31 ; 33), des informations relatives à un rayon de courbure d'une route en virage à un cycle prédéterminé ;
de stocker, dans une partie de stockage (12), un résultat de détection de la partie de détection de route en virage ;
d'amener une partie de traitement (10) à récupérer à partir de la partie de stockage, sur la base d'informations concernant une vitesse de véhicule du propre véhicule, les informations relatives au rayon de courbure de la route en virage qui est située à une distance prédéterminée derrière une position actuelle du propre véhicule.
d'amener la partie de traitement à définir une région cible de détection derrière le propre véhicule sur la base des informations récupérées, et
d'amener la partie de traitement à détecter le véhicule voisin derrière le propre véhicule sur la base d'un résultat de détection dans la région cible de détection définie par une partie de détection de véhicule voisin (20 ; 26), le véhicule voisin circulant sur une voie particulière qui a une relation prédéterminée avec une voie de circulation du propre véhicule.

FIG.1

VEHICLE SPEED SENSOR 32

STEERING ANGLE SENSOR 30

STORING DEVICE 12

PROCESSING DEVICE 10

REAR RADAR SENSOR 20

1

# FIG.2

```
        ┌─────────────────┐
        │     START       │
        └─────────────────┘
                 │
                 ▼
┌──────────────────────────────────────┐
│ CALCULATE AND STORE STEERING ANGLE   │────  S200
└──────────────────────────────────────┘
                 │
                 ▼
┌──────────────────────────────────────┐
│  CALCULATE AND STORE VEHICLE SPEED   │────  S202
└──────────────────────────────────────┘
                 │
                 ▼
┌──────────────────────────────────────┐
│ READ CALCULATED VALUES OF STEERING   │
│ ANGLE AND VEHICLE SPEED RELATED TO   │────  S204
│ POINT BEHIND OWN VEHICLE BY          │
│ PREDETERMINED DISTANCE               │
└──────────────────────────────────────┘
                 │
                 ▼
┌──────────────────────────────────────┐
│     CALCULATE CURVE INDEX VALUE      │────  S206
└──────────────────────────────────────┘
                 │
                 ▼
┌──────────────────────────────────────┐
│    SET DETECTION TARGET REGION       │────  S208
│   ACCORDING TO CURVE INDEX VALUE     │
└──────────────────────────────────────┘
```

S210

NEIGHBORING VEHICLE DETECTED BY REAR RADAR IN SET DETECTION TARGET REGION ?

YES    NO

S212       S214

DETECTION FLAG←1      DETECTION FLAG←0

```
        ┌─────────────────┐
        │      END        │
        └─────────────────┘
```

# FIG.3

# FIG.4

# FIG.5

EP 2 704 122 B1

# FIG.6

# FIG.7

START

CALCULATE AND STORE YAW RATE — S700

CALCULATE AND STORE VEHICLE SPEED — S702

READ CALCULATED VALUES OF YAW RATE AND VEHICLE SPEED RELATED TO POINT BEHIND OWN VEHICLE BY PREDETERMINED DISTANCE — S704

CALCULATE CURVE INDEX VALUE — S706

SET DETECTION TARGET REGION ACCORDING TO CURVE INDEX VALUE — S708

S710

NEIGHBORING VEHICLE DETECTED BY REAR RADAR IN SET DETECTION TARGET REGION ?

NO

YES

S712

DETECTION FLAG←1

S714

DETECTION FLAG←0

END

EP 2 704 122 B1

# FIG.8

**3**

```
        ┌──────────────┐ 33        ┌──────────────┐ 32
        │ FRONT CAMERA │           │ VEHICLE SPEED│
        │              │           │    SENSOR    │
        └──────┬───────┘           └──────┬───────┘
               │                          │
               │              ┌───────────┘
               ▼              ▼
┌──────────┐ 20    ┌──────────────┐ 10    ┌──────────────┐ 12
│ REAR RADAR│─────▶│  PROCESSING  │◀─────▶│STORING DEVICE│
│  SENSOR   │      │    DEVICE    │       │              │
└──────────┘       └──────────────┘       └──────────────┘
```

# FIG.9

```
                    ┌─────────────┐
                    │    START    │
                    └──────┬──────┘
                           │
          ┌────────────────▼────────────────┐
          │  INPUT FRONT CIRCUMSTANCE IMAGE  │───── S900
          └────────────────┬────────────────┘
                           │
          ┌────────────────▼────────────────┐
          │  WHITE LINE RECOGNITION PROCESS TO │
          │  CALCULATE AND STORE CURVATURE   │───── S902
          │    RADIUS OF FORWARD ROAD        │
          └────────────────┬────────────────┘
                           │
          ┌────────────────▼────────────────┐
          │    READ CALCULATED VALUES OF     │
          │ CURVATURE RADIUS RELATED TO POINT │
          │ BEHIND OWN VEHICLE BY PREDETERMINED │──── S904
          │           DISTANCE               │
          └────────────────┬────────────────┘
                           │
          ┌────────────────▼────────────────┐
          │   CALCULATE CURVE INDEX VALUE    │───── S906
          └────────────────┬────────────────┘
                           │
          ┌────────────────▼────────────────┐
          │   SET DETECTION TARGET REGION    │
          │  ACCORDING TO CURVE INDEX VALUE  │───── S908
          └────────────────┬────────────────┘
                           │
```

NEIGHBORING VEHICLE DETECTED BY REAR RADAR IN SET DETECTION TARGET REGION ? — S910

NO

YES

S912

S914

DETECTION FLAG←1

DETECTION FLAG←0

END

24

FIG.10

REAR
MONITORING
CAMERA
26

PROCESSING
DEVICE
10

STEERING ANGLE
SENSOR
30

VEHICLE SPEED
SENSOR
32

STORING DEVICE
12

4

EP 2 704 122 B1

# FIG.11

```
┌─────────────────────────────┐
│            START            │
└─────────────────────────────┘
              │
              ▼
┌─────────────────────────────────┐
│ CALCULATE AND STORE STEERING ANGLE │──── S1100
└─────────────────────────────────┘
              │
              ▼
┌─────────────────────────────────┐
│ CALCULATE AND STORE VEHICLE SPEED │──── S1102
└─────────────────────────────────┘
              │
              ▼
┌─────────────────────────────────┐
│ READ CALCULATED VALUES OF STEERING │
│ ANGLE AND VEHICLE SPEED RELATED TO │──── S1104
│   POINT BEHIND OWN VEHICLE BY      │
│      PREDETERMINED DISTANCE        │
└─────────────────────────────────┘
              │
              ▼
┌─────────────────────────────────┐
│    CALCULATE CURVE INDEX VALUE    │──── S1106
└─────────────────────────────────┘
              │
              ▼
┌─────────────────────────────────┐
│    SET DETECTION TARGET REGION    │──── S1108
│  ACCORDING TO CURVE INDEX VALUE   │
└─────────────────────────────────┘
              │
              ▼
         ◇ S1110
      NEIGHBORING
   VEHICLE DETECTED BY REAR ──── NO
   MONITORING CAMERA IN SET
     DETECTION TARGET
         REGION ?
         │ YES
         ▼
   S1112                    S1114
┌──────────────────┐  ┌──────────────────┐
│ DETECTION FLAG←1 │  │ DETECTION FLAG←0 │
└──────────────────┘  └──────────────────┘
         │                    │
         ▼────────────────────┘
┌─────────────────┐
│       END       │
└─────────────────┘
```

# FIG.12

```
        ┌─────────────────┐
        │      START       │
        └────────┬────────┘
                 │
┌────────────────▼────────────────┐
│ OBTAIN AND STORE REAR CIRCUMSTANCE │ ─── S1200
│ IMAGE FROM REAR MONITORING CAMERA  │
└────────────────┬────────────────┘
                 │
┌────────────────▼────────────────┐
│    READ REAR CIRCUMSTANCE IMAGE   │
│ RELATED TO POINT BEHIND OWN VEHICLE │ ─── S1204
│    BY PREDETERMINED DISTANCE      │
└────────────────┬────────────────┘
                 │
┌────────────────▼────────────────┐
│    CALCULATE CURVE INDEX VALUE    │ ─── S1206
└────────────────┬────────────────┘
                 │
┌────────────────▼────────────────┐
│    SET DETECTION TARGET REGION    │ ─── S1208
│  ACCORDING TO CURVE INDEX VALUE   │
└────────────────┬────────────────┘
                 │
```

S1210

NEIGHBORING VEHICLE DETECTED BY REAR MONITORING CAMERA IN SET DETECTION TARGET REGION ?

NO

YES

S1212

DETECTION FLAG←1

S1214

DETECTION FLAG←0

END

# FIG.13

EP 2 704 122 B1

# FIG.14

```
                    ┌──────────────┐
                    │    START     │
                    └──────┬───────┘
                           │
                           ▼        S1400
          ◇─────────────────────────────◇
    NO    │    DETECTION FLAG 1 ?        │
   ◄──────◇─────────────────────────────◇
                           │ YES
                           ▼        S1402
          ◇─────────────────────────────◇
    NO    │   ALARM CONDITION MET ?      │
   ◄──────◇─────────────────────────────◇
                           │ YES
                           ▼
          ┌─────────────────────────────┐
          │       OUTPUT ALARM          │   S1404
          └──────────────┬──────────────┘
                         │
                         ▼
                 ┌──────────────┐
                 │     END      │
                 └──────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003063273 A
- JP 9203780 A
- EP 1657568 A1